# EUROPEAN PATENT APPLICATION

(11) **EP 2 146 444 A1**
(43) Date of publication of application: **20.01.2010**
(21) Application number: 08160662.6
(22) Date of filing: 17.07.2008
(51) Int. Cl.: H04B 10/158

(54) **An optical NRZ-DPSK signal detector**

(71) Applicant: Danmarks Tekniske Universitet, 2800 Kgs. Lyngby (DK)
(72) Inventor: Tokle, Torger, 2300, Copenhagen S (DK)
(74) Representative: Plougmann & Vingtoft A/S

(57) **Abstract**

The present invention provides a method for receiving an optical NRZ-DPSK signal. The method includes a signal conversion step and a detection step. A clock signal is derived from the incoming optical signal, and the clock signal is used to control an amplitude modulator to effectuate a signal conversion of the NRZ-DPSK to a return-to-zero on-off-keyed (RZ-OOK) signal. An NRZ-DPSK to RZ-OOK signal converter and an NRZ-DPSK receiver are also provided.

## Description

### Background of the invention

Non-return-to-zero Differential (Binary) Phase Shift Keying (NRZ-DPSK or NRZ-DBPSK) is a promising modulation format for optical communication systems operating at future, higher bit rates, for instance 40 Gbit/s. The format offers better receiver sensitivity compared to the commonly used on-off keying (OOK) modulation. Also, the format is rather tolerance to various fiber impairments, such as dispersion, and it has a better spectral efficiency compared to OOK. It is therefore potentially very suitable for long-haul transmission at high bit rates.

An NRZ-DPSK optical data signal is also rather simple to generate with existing equipment. It can for instance be generated simply by propagating a continuous-wave optical signal through a Mach-Zehnder modulator (MZM) modulated with an electrical signal representing the data to be carried.

In an NRZ-DPSK signal, a "1"-bit can be represented by a phase shift and a "0"-bit be represented by leaving the phase unchanged from one bit slot to the next. Importantly, both "0"-bits and "1"-bits are "on"-states, meaning that light is emitted whether the signal is a "0" bit or a "1" bit. Very importantly, both "0" bits and "1" bits are on-states. This means that an NRZ-DPSK signal can be produced with a lower chirp than signals produced for instance by direct laser modulation.

The most common method for detecting NRZ-DPSK signals is to apply a delay demodulation followed by a direct detection. The direct detection approach uses a Mach-Zehnder interferometer (MZI) to split the signal into two waveguide arms. The signal in one of the arms is then delayed by one bit, and the signals from the two arms are recombined at the output end of the MZI. The MZI is designed and the optical parameters adjusted in such a way that a phase difference of zero between the two signals in the arms of the MZI produces a constructive interference at one of the output arms of the MZI and a destructive interference in the other output arm; and vice versa when the phase difference is π . A zero phase difference will therefore result in the light coming out mainly in one of the two output arms, and a phase difference of π will result in the light coming out mainly in the other of the two output arms.

With balanced detection, a photodiode is connected to both of the MZI outputs, and the decision on whether the received bit is a "0" or a "1" is carried out by comparing the currents produced by the two photodiodes. For single-ended detection, only one of the outputs are used. Though balanced detection is slightly more complicated, it also improves the receiver sensitivity by 3 dB.

The method of detection described above has a number of disadvantages. Firstly, delay demodulators specifically designed for the purpose of demodulating phase-modulated signals are very costly. Secondly, the "delay demodulation, direct detection" method is locked to a specific bit rate (the delay must equal one bit). Thirdly, unless significant measures are taken to compensate for it, the delay demodulator is typically very frequency-dependent. It must therefore be precisely tuned to the specific bit rate and the specific wavelength of the signal.

### Summary of the invention

The method for detection described above relies on the phase information in the NRZ-DPSK signal. However, when generating a NRZ-DPSK signal using a Mach-Zehnder modulator (MZM), there is also an amplitude modulation (amplitude information) in addition to the phase modulation (phase information). This is because in order to go from the 0 phase state to the π phase state, the zero point is crossed. Thus the both the phase and amplitude is modulated. It therefore appears that there is essentially a large degree of redundancy in the information contained in the phase and the information contained in the amplitude. After all, changes in the phase are directly linked with an amplitude drop to zero (at least close to zero). In other words, an amplitude drop to zero reflects a change from a "1" bit to a "0", or vice versa.

The inventor has realized that the phase-based delay detection method is not the only method of detecting optical NRZ-DPSK signals. Instead, the inventor has in fact realized a method that utilizes the amplitude information and not just the phase information to extract the data comprised in a NRZ-DPSK signal, despite the fact that this amplitude modulation appears to simply be a "side effect".

In a first aspect, the invention provides a method for converting a non-return-to-zero optical differential-phase-shift-keying (NRZ-DPSK) signal *A_{DPSK}*(*t*) to a converted optical signal, *A_{CONV}*(*t*). The method comprises:
- splitting the NRZ-DPSK signal into at least a first optical signal and a second optical signal;
- performing a clock recovery based on the first optical signal, thereby obtaining a clock signal associated with the NRZ-DPSK signal;
- modulating the second optical signal using an amplitude modulator controlled by a control signal derived from the clock signal, thereby obtaining the converted signal, *A_{CONV}*(*t*).

This method can be realized with existing, mass-produced components. In principle, a splitter, a clock recovery circuit and an amplitude modulator is needed. A clock recovery circuit is required anyway, so the use of a clock recovery circuit adds no extra cost compared to existing conversion methods. At the same time, the method above does not require the (rather costly delay) delay demodulator. Splitters, clock recovery circuits and amplitude modulators are well known to the person skilled in the art.

The amplitude modulation can be performed for instance with a Mach-Zehnder modulator (MZM) or an electroabsorption-based modulator (EAM). The latter typically does not comprise an interferometric part as such, but instead modulates the amplitude simply through a modulation of the absorption coefficient.

The conversion can be expressed in terms of a conversion transfer function, *M*(*t*). The transfer function fulfils *A_{CONV}*(*t*) = *M*(*t*)·*A_{DPSK}*(*t*). The transfer function *M*(*t*) corresponding to the modulation effectuated by the amplitude modulator should have a plurality of maxima that coincide (at least substantially) with a corresponding plurality of minima of *A_{DPSK}*(*t*). This means that the minima of the NRZ-DPSK signal *A_{DPSK}*(*t*) are retained, while the modulation "carves" the NRZ-DPSK signal in between said plurality of minima of *A_{DPSK}*(*t*).

Although in some cases dispensable - this depends on the particular application - the transfer function *M*(*t*) is periodic, and either *M*(*t*) has a periodicity corresponding to a multiple of a bit rate of *A_{DPSK}*(*t*), or said bit rate is a multiple of the periodicity of the transfer function *M*(*t*). If *A_{DPSK}*(*t*) is a non-time-division-multiplexed signal, i.e. all bits in the NRZ-DPSK signal belong to the same information bit stream, a periodicity of *M*(*t*) equal to the bit rate of *A_{DPSK}*(*t*) is advantageous.

The amplitude modulation can be effectuated in a number of ways, for instance by using an interferometer-based modulator, such as a Mach-Zehnder modulator. In this case, the second optical signal is coupled into an input end of an interferometer part of the modulator. The interferometer part then splits the second optical signal into two arms. (The interferometer might have more than two arms, for instance to provide a third arm which can receive a part of the second optical signal and is coupled for instance to a signal monitor, whereby the signal power, frequency, bit rate or other property of the second optical signal can be monitored.) This phase change between the signals in the two arms is induced by applying a control signal to certain sections (one or more) of one or both of the arms, these sections inducing a phase change in the optical signal when the control signal is applied. The phase-change inducing sections might for instance be appropriately controlled semiconductor laser-type sections. Typically, these sections are typically designed to exhibit a low absorption coefficient. The control signal is then applied to induce an appropriate phase difference between the optical signals in the two arms. A constructive interference at the output end of the interferometer part is obtained by providing the same phase change (modulo 2π) to the signals in the two arms. The output end of the interferometer comprises is a combiner that combines the signals from the two arms. A destructive interference at the output end of the interferometer part is obtained when the phase of the signal in one arm is in anti-phase with the signal in the other arm (the phase difference modulo 2π is ±π ). Such components and their operation are well known to the person skilled in the art.

The clock signal itself might be used as a control signal (i.e. the clock recovery circuit is a control signal generator), or a control signal can be generated based on the clock signal in a separate control signal generator. Such technologies are well known to a person skilled in the art. The control signal can be electrical or optical. In the example described above, an electrical control signal could be used. A driving circuit can use the clock signal to provide an electrical control signal which can be applied to the laser-type sections to modulate their refractive indices and thereby effect the phase change. Alternatively, the control signal could be optical and be introduced into the laser-type sections, for instance through the interferometer arms.

The signal at the output of the interferometer part represents the converted signal. The "output end" might also comprise further optical elements, such as an integrated straight waveguide which passes light onwards from the actual combiner part. A section of air can also be a part of the interferometer-based modulator.

The amplitude modulator could also be absorption-based, in which case it comprises a waveguide part having an input end and an output end and an adjustable absorption. In this case, the modulation is obtained by:
- coupling the second optical signal into the input end of the waveguide part; and
- modulating the absorption using the control signal.

The signal at the output end of the waveguide part having the adjustable absorption represents the converted optical signal. Similarly to the interferometer-based method, the absorption-based modulation can also be either electrically or optically induced. As an example, an EAM-based amplitude modulator can be controlled using a voltage signal as a control signal, directly applied to the electroabsorption modulator. Similarly to the interferometer-based method, a voltage generator can use the clock signal to provide an electrical control signal.

Alternatively, the control signal can be an optical signal, in which case the optical signal is generated based on the obtained clock signal and is introduced into waveguide part of the electroabsorption modulator to produce the phase change referred to above. The optical signal can for instance be generated using a semiconductor laser.

In a second aspect, the invention provides a method for detecting an optical NRZ-DPSK signal. The method comprises:
- converting the NRZ-DPSK signal in accordance with the first aspect of the invention, thereby obtaining a converted signal;
- detecting the converted signal using a photo detection circuit.
   The photo detection circuit is for instance a "conventional" photo-detector. For the purpose of the invention, an "photo detection circuit" is a circuit that can pick up an optical signal and produce one or more photo detection output signals that can be used to decide whether the instantaneous amplitude corresponds to a "0" bit or to a "1" bit (if not based on the instantaneous amplitude, then at least an average of the amplitude over a certain time period, such as 5 ps, due to a limited temporal response of photo detection circuits). The photo detection output signals might be the output of a single-ended photo detector (i.e. using a single photo diode), or come from a photo detector having two photo diodes (as in a "balanced" photo detector). "Photo detection circuit" in the context of the invention may also include further electrical components/circuitry, where desirable.

In a third aspect, the invention provides an optical signal converter for format-converting an optical NRZ-DPSK signal, *A_{DPSK}*(*t*), into a converted optical signal, *A_{CONV}*(*t*). The converter is based on the principles described in relation to the first aspect of the invention. The converter thus comprises:
- a splitter for splitting the NRZ-DPSK signal into at least a first and a second optical signal;
- a clock recovery circuit connected to receive the first optical signal from the splitter and being configured to derive an associated clock signal;
- a control signal generator for producing a control signal based on the clock signal;
- an amplitude modulator connected to receive the second optical signal from the splitter and to receive the control signal from the control signal generator, the amplitude modulator being configured to modulate the second optical signal using the control signal, thereby providing the converted signal, *A_{CONV}*(*t*).
   As described previously, the amplitude modulator might for instance be an electroabsorption modulator or a Mach-Zehnder modulator, controlled as described.

Electroabsorption modulators and Mach-Zehnder modulators can both be fabricated to exhibit very little wavelength-dependence. The optical signal converter described above can therefore be fabricated to operate well over a wide frequency range. This means that it requires much less tuning than the "conventional" delay-demodulation-direct-detection method. A requirement for high-speed operation of the present optical signal converter is that the clock recovery circuit and the amplitude modulator are sufficiently responsive at the bit rate at which the converter is to be used. Since the clock recovery circuit tracks the bit rate, the optical signal converter is also much less dependent on the bit rate. The present invention can clearly take advantage of these properties.

The splitter can be a 3-dB splitter fabricated for instance in a suitable glass or semiconductor material, or a combination of materials. A splitter that splits the light in another ratio can also be used. It is desirable to have much light available in a detection circuit, and thus it is desirable to split the signal in such a way that only as much light as is required for providing the clock signal in the clock recovery circuit is split off in that direction. As much as possible of the remaining light is advantageously directed to the amplitude modulator.

Size and optical losses are of major concern in optical communication systems. Some or all of the elements of the converter (the splitter, the clock recovery circuit and amplitude modulator) are advantageously, at least partly, glass-based or semiconductor based, as fabrication reliability and reproducibility are high at this point in time. The material systems are also known as good candidates for obtaining components that introduce minimal loss. Preserving optical power is desirable when the optical signal converter is used as part of an optical detector.

A way of reducing optical loss is to monolithically integrate the component parts, for instance at least two of: the splitter, clock recovery circuit and amplitude modulator.

In case one or more of the component elements are discrete, integration on a common carrier provides a good way of minimizing losses.

A fourth aspect of the invention provides an optical receiver for receiving an optical NRZ-DPSK signal. The optical receiver comprises an optical signal converter in accordance with the third aspect of the invention, and furthermore comprises a photo detection circuit optically coupled to the amplitude modulator to receive the converted signal and produce a detection signal based on the received converted signal.

The optical receiver may further comprise a data recovery part coupled to the photo detection circuit to receive the detection signal therefrom and produce recovered data based on the detection signal by measuring amplitudes of the detection signal and determining, in a decision circuit, whether the measured amplitude corresponds to a "0" bit or a "1" bit. Recovery of data from a detection signal such as the detection signal described above, is easily performed by a person skilled in the art, and will thus not be described in any more detail.
The data recovery part may be adapted to receive the clock signal and to use the clock signal as a trigger when measuring the amplitude. This is typically the easiest way of recovering the data (i.e. accessing the data represented by the detection signal).

The recovered data is typically represented by an electrical output signal from the data recovery part, for instance as a binary, electrical signal.

As described above, the optical signal converter can be designed to operate well over a wide range of wavelengths and bit rates. If the photo detection circuit in the optical receiver can operate at the same bit rates as the optical signal converter, then the optical receiver can accordingly be designed to operate at the same bit rates.

As mentioned, a DPSK signal is often generated using a Mach-Zehnder modulator since it presently results in a signal having a better quality than one which is obtained using a phase modulator. Phase modulators are typically linear devices, and amplitude distortion on the driving signal will be directly translated to the optical signal as phase noise. In a MZ modulator, such distortions on the driving signal only results in small amplitude noise, whereas the phase change is exactly π .Since the MZ modulator is driven between two maxima, an amplitude transition from high output power to zero output power and back to high output power is unavoidable. Thus for a DPSK signal generated with an MZ modulator, a "1" bit is associated with a π phase change and a momentary drop in power, and a "0" bit corresponds to an unchanged phase level and unchanged amplitude level. Alternatively, but with the same effect, a "0" bit can be associated with a π phase change and a momentary drop in power, and a "1" bit corresponds to an unchanged phase level and unchanged amplitude level.

### Brief description of the drawings

Fig. 1 illustrates a conventional optical NRZ-DPSK transmitter and the principle of phase-shift keying.
Fig. 2 illustrates an NRZ-DPSK signal and a sinusoidal amplitude modulation to be applied to the NRZ-DPSK signal to obtain an RZ-DPSK signal.
Fig. 3 illustrates a conventional NRZ-DPSK optical receiver.
Fig. 4 illustrates an NRZ-DPSK optical receiver in accordance with the invention.
Fig. 5a and 5b illustrate NRZ-DPSK optical signal converters in accordance with the invention.
Fig. 6a illustrates an optical NRZ-DPSK signal.
Fig. 6b illustrates an optical NRZ-DPSK signal together with an amplitude modulation signal to be applied to the NRZ-DPSK signal to obtain an RZ-OOK signal for use in recovering the data from the NRZ-DPSK signal.
Fig. 6c illustrates the optical RZ-OOK signal that results by applying the amplitude modulation signal illustrated in Fig. 6b to the NRZ-DPSK signal from Fig. 6a and 6b.
Fig. 7 shows an eye diagram corresponding to an optical RZ-OOK signal such as that in Fig..
Fig. 8 and 9 illustrate setups for determining bit error rates for a conventional NRZ-DPSK receiver and a NRZ-DPSK receiver in accordance with the invention.
Fig. 10a illustrates an eye diagram of a NRZ-DPSK signal received using a conventional delay-demodulation-direct-detection method.
Fig. 10b illustrates an eye diagram of an NRZ-DPSK signal received using the novel detection in accordance with the invention.
Fig. 11 show measured Q-factors in setups similar to those in Figs. 8 and 9, but without a fiber span (that is, in a back-to-back (B2B) configuration.
Fig. 12 show measured Q-factors in the setups in Figs. 8 and 9.

### Detailed description of selected embodiments

The following describes selected embodiments of the invention. The selected embodiments are examples only.

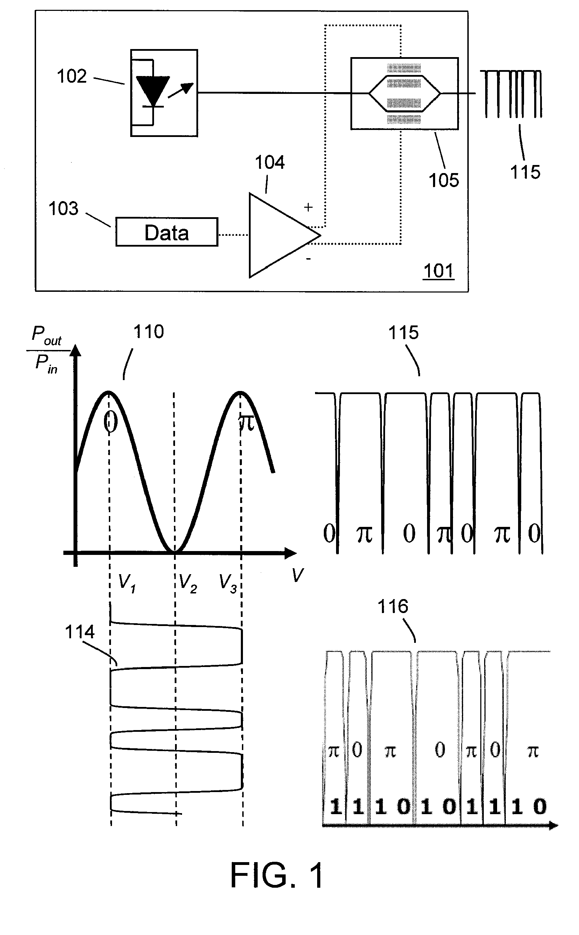

Fig. 1 illustrates an example of an NRZ-DPSK transmitter 101. It comprises a light emitter 102, data 103 to be transferred, and a driving circuit 104 for applying a voltage to Mach-Zehnder modulator (MZM) 105. The output signal 115 represents the data 103. The transfer function of the MZM is illustrated by function 110. The transfer function has a maximum at voltage *V*₁ and at *V*₃, and a minimum in between, at *V*₂. Light from light emitter 102 is coupled into the MZM 105, which is modulated with a voltage signal 114 produced by the driving circuit.

Associated with the change in amplitude from the maximum at *V*₁, to 0 at *V*₂, and back to a maximum at *V*₃ is a phase change of π. In other words, a phase change of ±π is associated with the minima of the output signal 115. The relation between the phase change and the information is illustrated in 116. A phase change of π is interpreted as a "1"-bit. No phase change is interpreted as a "0"-bit. Element 116 in Fig. 1 also illustrates that a "1"-bit is preceded by a zero in the amplitude, and a "0"-bit is preceded by no change in the amplitude.

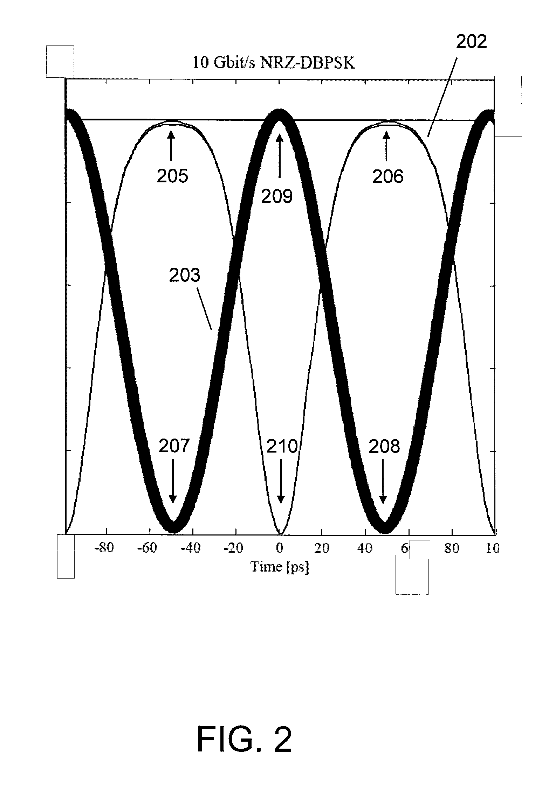

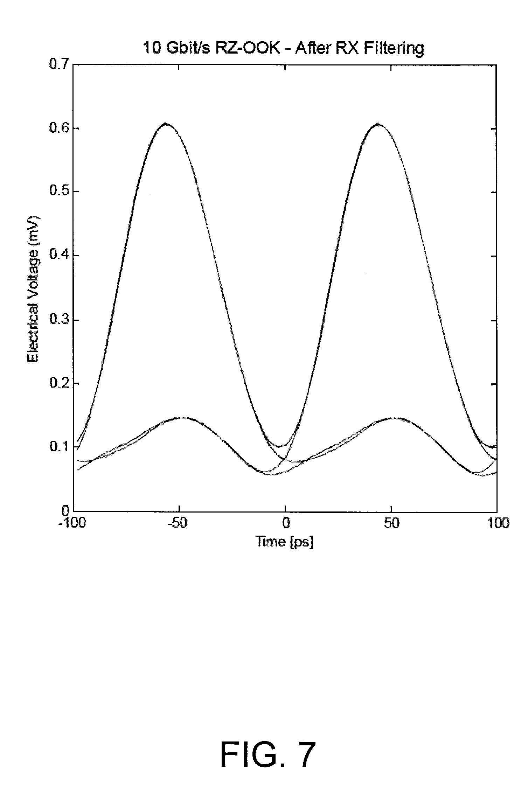

Fig. 2 illustrates an eye diagram 202 of a 10 Git/s NRZ-DPSK signal. The peaks 205 and 206 of the signal 202 near -50 ps and 50 ps, respectively, represent modulation maxima corresponding voltages, *V*₁ and *V*₃, respectively (see Fig. 1). Fig. 2 also illustrates a sinusoidal modulation 203 to be applied to the signal 202 in order to demodulate the signal 202 in accordance with aspects of the invention. The sinusoidal 203 has a period of 100 ps. Its minima 207 and 208 are illustrated as being aligned with maxima 205 and 206, respectively, of the NRZ-DPSK signal. The maximum 209 of the modulation 203 is aligned with minima 210 of the NRZ-DPSK signal. The resulting, modulated signal is illustrated in Fig. 7, which is discussed below.

The amplitude modulation can be imposed for instance by modulating the NRZ-DPSK in a Mach-Zehnder modulator, as will be illustrated below.

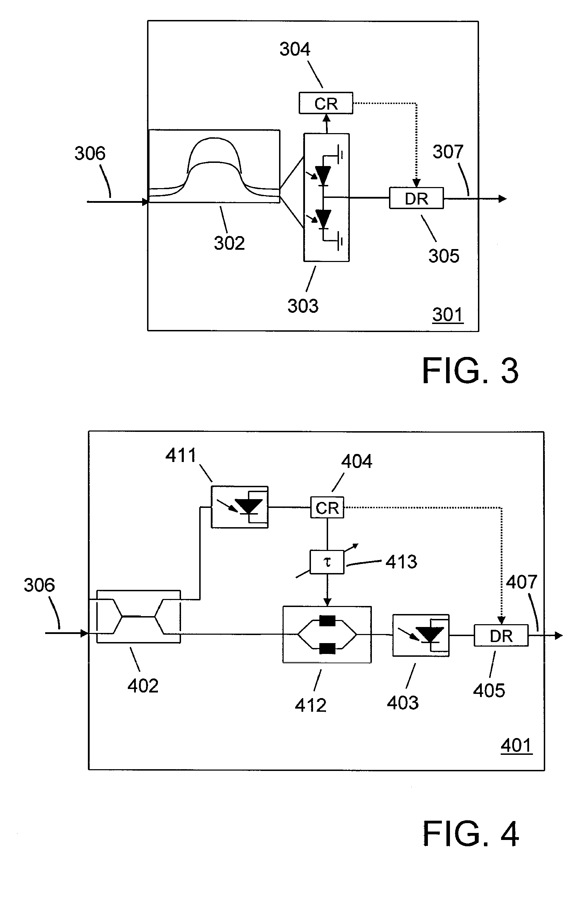

Fig. 3 illustrates a conventional NRZ-DPSK receiver. It includes a delay demodulator 302 at an input end of the receiver. The delay demodulator splits an incoming optical NRZ-DPSK signal 306 into two parts and delays one part by one bit relative to the other part. The two parts are then combined again in the modulator. The receiver in Fig. 3 uses balanced detection, and the delay demodulator is thus designed to output light in one of two arms, each being coupled to a photo detector 303. A clock is recovered in the clock recovery part, 304, and is used by the data recovery part 305. Output signal 307 represents recovered data.

Fig. 4 illustrates an NRZ-DPSK receiver according to the present invention. Instead of a delay demodulator 302, this receiver has a splitter 402 that split the incoming signal 306 in two signals, signal 1 and signal 2. One part, signal 1, is detected using a photo diode 411, which produces a detection signal. A clock recovery part 404 determines a clock signal based on the detection signal from the photo diode. The second part of the incoming signal, signal 2, enters the Mach-Zehnder modulator 412. The clock signal is used to control the MZM to apply the sinusoidal modulation to signal 2. The tunable delay line 413 is used to ensure that the modulation signal is aligned properly with signal 2. This alignment was discussed above in relation to Fig. 2. The receiver in Fig. 4 uses a single photo diode 403 in detecting the signal at the output of the modulator 412. The clock recovery signal is used by the data recovery in recovering data. Output signal 407 represents the recovered data.

As mentioned previously, an advantage of the invention in Fig. 4 compared to the conventional device in Fig. 3 is that the invention eliminates the delay demodulator, and it can be made by combining existing optical elements that are widely available and therefore also (in a sense) "cheap".

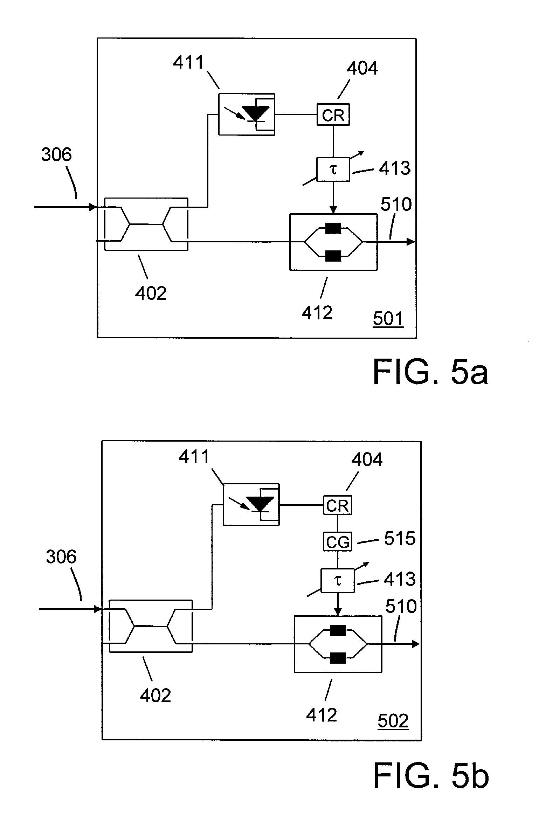

Fig. 5a illustrates an optical NRZ-DPSK signal converter in accordance with the invention. This converter is a core of the invention, and is a part of the receiver in Fig. 4. The tuneable delay line 413 can be left out, but makes it easier to optimize the performance of the converter. The converted signal is represented by arrow 510.

Fig. 5b illustrates a control signal generator 515 in an optical signal converter 502 explicitly. Though the clock recovery circuit itself may be adapted to provide a suitable control signal for use by the modulator 412, it is convenient to use the clock signal as a trigger signal in a control signal generator. The control signal generator may produce a voltage signal or it may produce an optical signal, as described previously. A voltage signal is, at this point, very often suitable. It is expected that future systems to a higher degree employs optical control. In that case, an optical control signal generator may be desirable. The use of such signals for affecting the phase change or absorption coefficient in for instance MZMs and EAMs is well-known to a person skilled in the art. The specifics related to the actual generation and optimization of a voltage control signal or an optical control signal will therefore not be discussed in further detail.

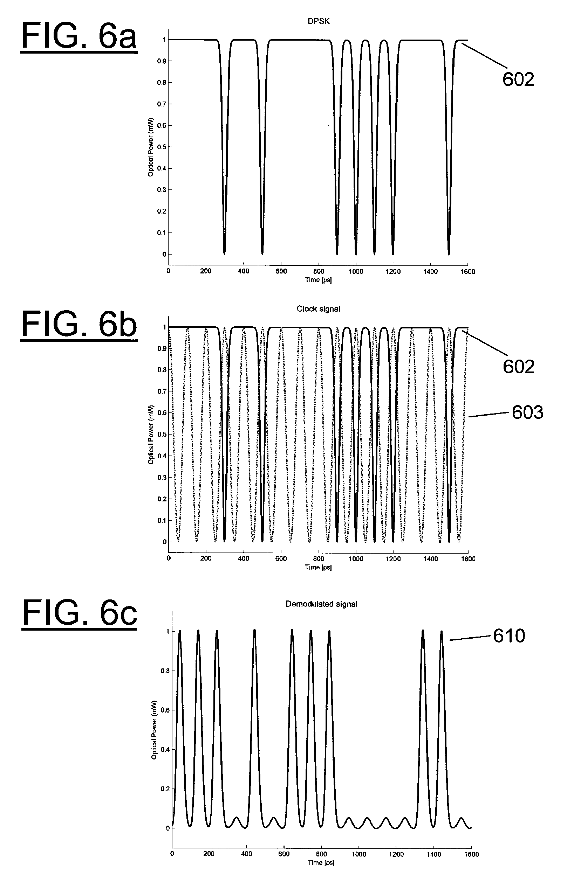

Fig. 6a illustrates an optical 10-Gbit/s NRZ-DPSK signal 602. In Fig. 6b, the same signal is shown together with a sinusoidal modulation signal 603 with which the NRZ-DPSK signal is modulated ("multiplied") in the modulator 412 (see Fig. 5b). To convert the signal, it is coupled into splitter 402 (Fig. 5b). A clock signal is derived in clock recovery circuit 404 based on the detected signal from photo diode 411. The clock signal is then used as a trigger in control signal generator 515, which is designed to produce a sinusoidal voltage signal. Applying this signal to the phase-modulation regions of the MZM 412 (illustrated as black pads on the two arms), the modulation signal ("transfer function") 603 results. The modulation of the signal 602 results in the (demodulated) output signal 610 illustrated in Fig. 6c.

The converted signal is a return-to-zero signal due to the modulation in the MZM. Note in Fig. 6b that the peaks of the modulation signal are aligned with the minima of the NRZ-DPSK signal. This has been discussed above, in particular in relation to Fig. 2.

In the present example, the modulation signal has a frequency that corresponds to the bit rate of the NRZ-DPSK signal 602. In case signal 602 represents a time-division-multiplexed signal with four 2.5-Gbit/s channels, the control signal 603 could instead have a 2.5-GHz frequency. To obtain a demultiplexing and conversion of such a signal, the width of the modulation peaks must be narrow enough to distinguish the individual channel. The modulation signal would be similar to signal 603, which can be considered as a signal appropriate for demultiplexing four channels in a time-division-multiplexed signal. To demultiplex a single channel, one would eliminate (or not generate in the control signal generator) the three unwanted channels in the modulation signal, and the result would in turn be a signal similar to 610, but missing the peaks corresponding to said three unwanted channels.

Fig. 7 illustrates the eye diagram of the signal 610 that results after modulation of the NRZ-DPSK signal 602 with signal 603. In the schematic Fig. 2, this is "obtained" when modulation 203 in Fig. 2 is imposed on the signal 202. The signal is detected by photo detector 403 (see Fig. 4), where input signal 306 corresponds to signal 202 in Fig. 2. The output from the photo diode 403 can then be used in a conventional return-to-zero data recovery circuit to determine the data in the input signal.

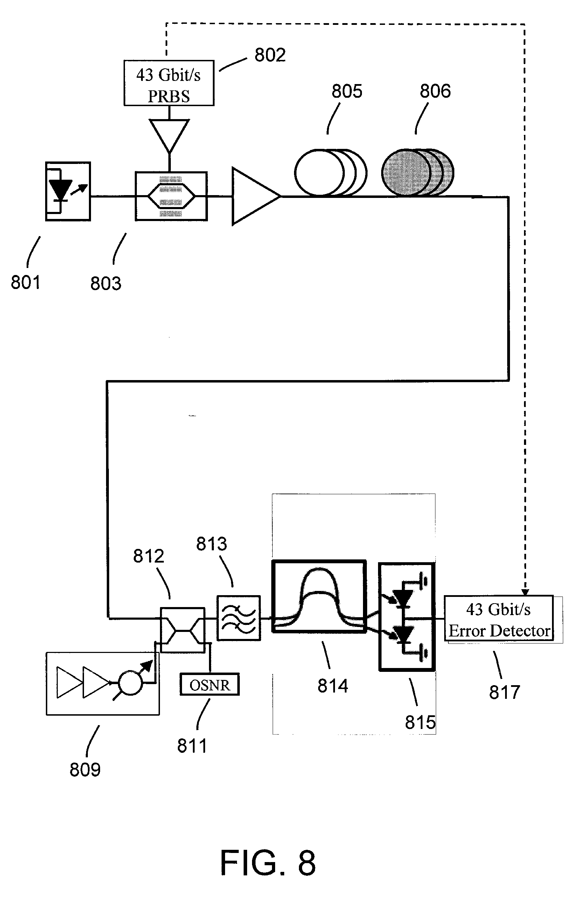

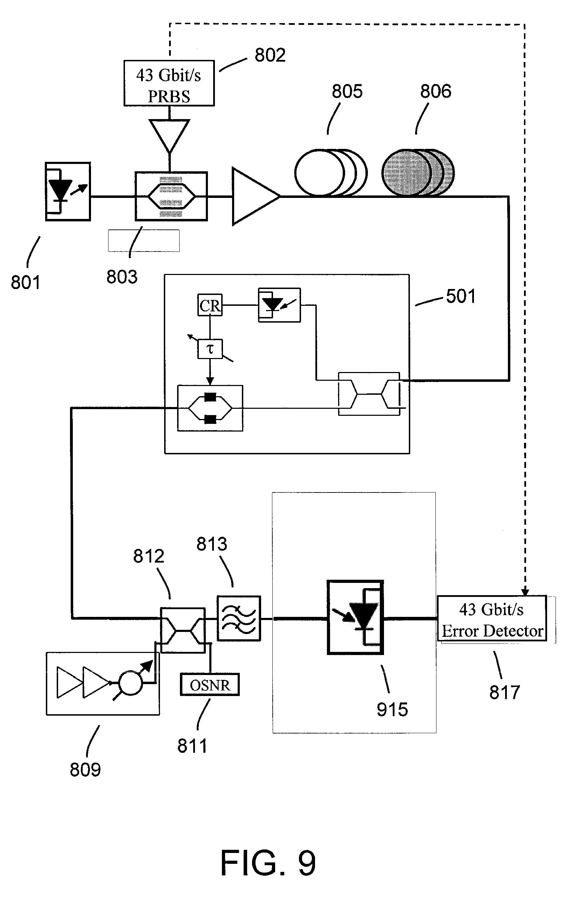

Fig. 8 and 9 illustrates experimental setups for determining some performance characteristics of a signal converter in accordance with the invention. Light is emitted by laser 801 and is modulated in Mach-Zehnder modulator 803 with 43-Gbit/s pseudo-random binary signal (PRBS) generated by signal generator 802 and having a sequence length of 2³¹ -1 bits. The signal was transmitted over a fibre span consisting of standard single-mode fibre 805 and dispersion compensation fibre 806 such that the chromatic dispersion was compensated.

In Fig. 8, a conventional NRZ-DPSK receiver is used. Noise can be added in the combiner 812 using the noise source 809, and the optical signal-to-noise be monitored in optical signal-to-noise ratio (OSNR) analyzer 811. The signal is filtered in filter 813 and demodulated in the delay demodulator 814. The resulting signal is picked up by photo diode 815. In Bit Error Detector 817, the data representing the transmitted and demodulated signal is recovered and compared with the original sequence from the signal generator 802 to determine the bit error rate.

Fig. 9 is a setup for determining the bit error rate using a converter in accordance with the present invention. The setup is similar to that in Fig. 8, but the receiving end is modified to incorporate the converter. The converter 501 converts the signal (see also Fig. 5 and the related description), which is then handled similarly to the NRZ-DPSK signal in Fig. 8: Noise is added in the combiner 812 using noise source 809, and the OSNR is monitored with OSNR analyzer 811. The signal is then filtered in filter 813. The signal has already been converted, so instead of the delay demodulator used in the setup in Fig. 8, the signal now needs merely to be detected, which takes place in photo detector 915. As in the setup employing the "conventional" converter, the data representing the transmitted and demodulated signal is recovered and compared with the original sequence from the signal generator 802 to determine the bit error rate. This is done in the Bit Error Detector 817.

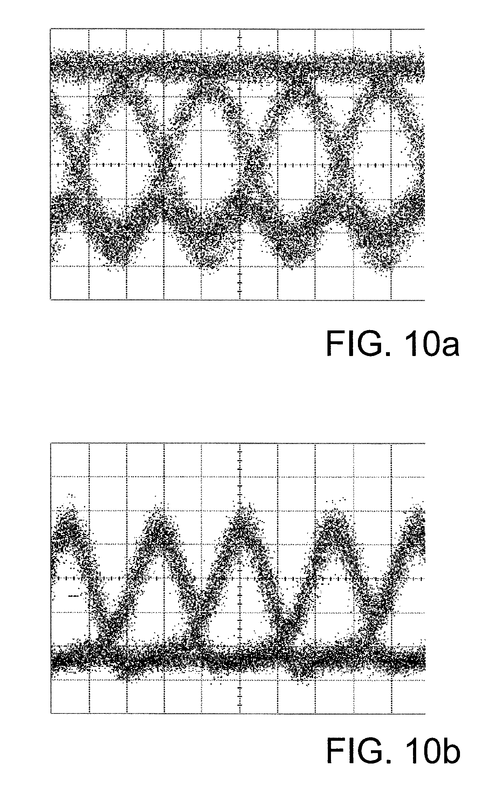

Fig. 10a illustrates an eye diagram of a 10 Gbit/s NRZ-DPSK signal after delay demodulation and balanced detection. That is, the eye diagram corresponds to the signal coming from the balanced photo detector 303 and entering the data recovery part 305 in Fig. 3. It is clearly seen that the detected signal is an NRZ signal.

Fig. 10b shows an eye diagram of a 10 Gbit/s NRZ-DPSK signal after having been converted in accordance with the present invention. That is, the eye diagram corresponds to the signal coming from the photo detector 403 and entering data recovery part 405 in Figure 4. It is clearly seen that the detected signal is an RZ signal.

The eyes were measured using a sampling oscilloscope. Note that the "data recovery part" in this example does not perform a "0"/"1" decision.

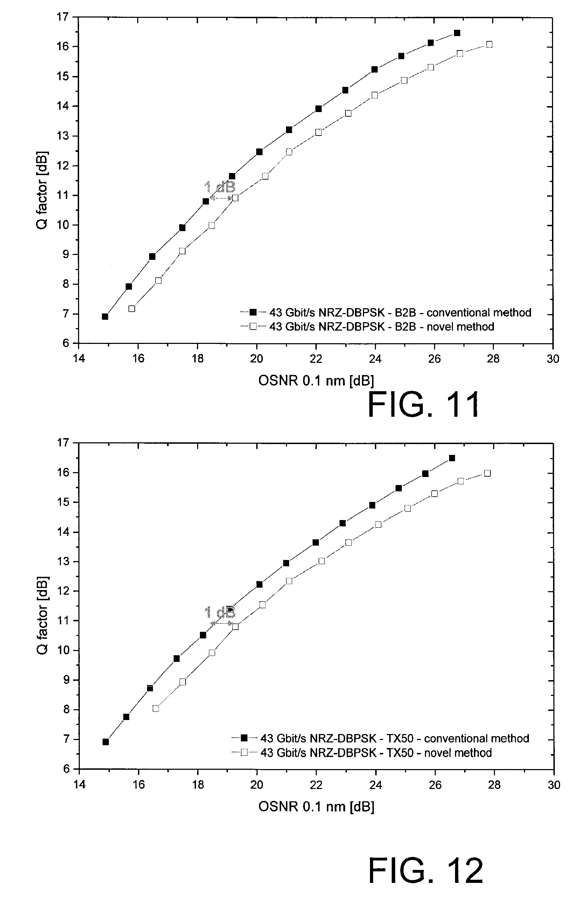

The two curves in Fig. 11 show measured Q-factors in setups similar to those in Figs. 8 and 9, but without the fiber spans 805 and 806, i.e. back-to-back, "B2B". The optical signal-to-noise ratio is measured with a 0.1 nm resolution bandwidth using an optical spectrum analyser. The upper curve shows the measured Q-factor for a conventional NRZ-DPSK receiver (the Q-factor is labelled "conventional method" in the figure), and the lower curve shows the measured Q-factor for a receiver in accordance with the present invention (the Q-factor is labelled "novel method" in the figure). The measurements show that the sensitivity of the receiver in accordance with the invention is reduced by only about 1 dB (at Q factor 11 dB, a typical performance requirement for current communication systems at present) compared to the sensitivity of the "conventional" receiver. This is even in spite of the fact that the receiver in accordance with the invention illustrated used in Fig. 9 uses a single-diode photo detector, whereas the conventional receiver illustrated in Fig. 8 uses a balanced photo detector. Roughly speaking, the 1-dB loss in sensitivity results from there being a 3-dB sensitivity loss due to the use of a non-balanced photo detector, and a 2-dB sensitivity gain due to the use of NRZ signals instead of RZ signals.

The two curves in Fig. 12 show measured Q-factors in the setups in Figs. 8 and 9, i.e. including a 50-km fiber span 805, as opposed to the setup to which the measurements in Fig. 11 corresponds. The measurements in the setups that include a fiber span show much the same behavior, and the reduction in sensitivity from the system in Fig. 8 to the system in Fig. 9 is only about 1 dB.

The 1-dB reduction must be seen in light of the advantages that the receiver in accordance with the present invention provides: Future optical telecom technology will increasingly be required to be capable of operating at multiple wavelengths and/or at multiple bit rates and adapt automatically. A single device converter in accordance with the present invention can be capable of fulfilling these requirements. On the other hand, the delay demodulator of the "conventional" NRZ-DPSK demodulator is a device that requires fine tuning and cannot be adapted to feature the same flexibility. Furthermore, a converter in accordance with the present invention is made, whether integrated or not, of parts that are already well understood and mass-produced for many purposes, and thus "cheap". On the other hand, the delay demodulator used in a conventional NRZ-DPSK converter has a limited number of applications, which is a typical indication that the device is costly and likely to remain so at least in the near future. Furthermore, the delay demodulator is quite "big", currently on the order of 2x2x2 cm³.

The present invention has been described by way of certain selected embodiments. The person skilled in the art will readily recognize that the functional elements/parts of the invention described above can be fabricated and combined in many ways and integrated to different degrees. Furthermore, the elements/parts can be realized in many different materials/material systems. The examples described in the present specification shall therefore not be construed as limiting the scope of protection. The scope of protection is defined by the features and steps described in the claims.

## Claims

1. A method for converting an non-return-to-zero optical differential-phase-shift-keying (NRZ-DPSK) signal *A_{DPSK}*(*t*) to a converted optical signal, *A_{CONV}*(*t*), the method comprising:
• splitting the NRZ-DPSK signal into at least a first optical signal and a second optical signal;
• performing a clock recovery based on the first optical signal, thereby obtaining a clock signal associated with the NRZ-DPSK signal;
• modulating the second optical signal using an amplitude modulator controlled by a control signal derived from the clock signal, thereby obtaining the converted signal, *A_{CONV}*(*t*).

2. The method according to claim 1, wherein a conversion transfer function *M*(*t*) corresponding to the modulation effectuated by the amplitude modulator has a plurality of maxima which coincide with a corresponding plurality of minima of *A_{DPSK}*(*t*).

3. The method according to claim 2, wherein the transfer function *M*(*t*) is periodic, and either *M*(*t*) has a periodicity corresponding to a multiple of a bit rate of *A_{DPSK}*(*t*), or said bit rate is a multiple of a periodicity of the transfer function *M*(*t*).

4. The method according to claim 3, wherein the periodicity of the transfer function *M*(*t*) corresponds to the bit rate of *A_{DPSK}*(*t*).

5. The method according to any of claims 1 to 4, wherein the amplitude modulator is interferometer-based, having an interferometer part with an input end and an output end, and wherein the step of modulating comprises:
• coupling the second optical signal into the input end of the interferometer part, the interferometer part splitting the second optical signal into at least a first and a second arm of the interferometer part; and
• controlling a phase change between the two arms by using the control signal to induce a constructive/destructive interference at the output end of the interferometer part, thereby obtaining the converted signal.

6. The method according to any of claims 1 to 4, wherein the amplitude modulator is absorption-based and comprises a waveguide part having an input end and an output end and an adjustable absorption, and wherein the step of the modulating comprises:
• coupling the second optical signal into the input end of the waveguide part; and
• modulating the absorption using the control signal.

7. A method for detecting an optical NRZ-DPSK signal *A_{DPSK}*(*t*), comprising:
• converting *A_{DPSK}*(*t*) according to a method according to any of claims 1-6, thereby obtaining a converted signal *A_{CONV}*(*t*) ;
• detecting the converted signal *A_{CONV}*(*t*) using an photo detection circuit.

8. An optical signal converter for format-converting an optical NRZ-DPSK signal, *A_{DPSK}*(*t*), into a converted optical signal, *A_{CONV}*(*t*), comprising:
• a splitter for splitting the NRZ-DPSK signal *A_{DPSK}*(*t*) into at least a first and a second optical signal;
• a clock recovery circuit connected to receive the first optical signal from the splitter and being configured to derive an associated clock signal;
• a control signal generator for producing a control signal based on the clock signal;
• an amplitude modulator connected to receive the second optical signal from the splitter and to receive the control signal from the control signal generator, the amplitude modulator being configured to modulate the second optical signal using the control signal, thereby providing the converted signal, *A_{CONV}*(*t*).

9. The optical signal converter according to claim 8, wherein a corresponding conversion transfer function *M*(*t*) corresponding to the modulation effectuated by the amplitude modulator has a plurality of maxima which coincide with a corresponding plurality of minima of *A_{DPSK}*(*t*).

10. The optical signal converter according to claim 8 or 9, wherein the control signal is periodic and has a periodicity corresponding to a multiple of a bit rate of *A_{DPSK}*(*t*) or said bit rate is a multiple of a periodicity of the control signal.

11. The optical signal converter according to claim 8 or 9, wherein the periodicity of the control signal corresponds to a bit rate of *A_{DPSK}*(*t*).

12. The optical signal converter according to any of claims 8-11, further comprising a tuneable delay line for controlling a transmission time of the control signal from the control signal generator to the amplitude modulator.

13. The optical signal converter according to any of claims 8-12, wherein the splitter and the amplitude modulator are glass-based or semiconductor-based.

14. The optical signal converter according to any of claims 8-13, wherein at least two of the following are integrated: the splitter; the clock recovery circuit; the amplitude modulator.

15. The optical signal converter according to claim 14, wherein the integration is, at least partly, a monolithic integration, or is an integration on a common physical carrier.

16. An optical receiver for receiving an optical NRZ-DPSK signal *A_{DPSK}*(*t*), comprising
• an optical signal converter according to any of claims 8-15;
• a photo detection circuit optically coupled to the amplitude modulator to receive the converted signal therefrom and produce a corresponding detection signal.

17. The optical receiver according to claim 16, further comprising;
• a data recovery part coupled to the photo detection circuit to receive the detection signal therefrom and produce recovered data based on the detection signal by measuring amplitudes of the detection signal and determining, in a decision circuit, whether the measured amplitude corresponds to a "0" bit or a "1" bit.

18. The optical receiver according to claim 17, wherein the data recovery part is adapted to furthermore receive the clock signal and to use the clock signal as a trigger when measuring the amplitudes.
